# FASCICULE DE BREVET EUROPEEN

(11) **EP 0 745 232 B1**
(45) Date de publication et mention de la délivrance du brevet: **29.12.1997**
(21) Numéro de dépôt: 95909822.9
(22) Date de dépôt: 14.02.1995
(51) Int. Cl.: G02F 1/00

(54) **MODULATEUR ELECTRO-OPTIQUE**
ELEKTRO-OPTISCHER MODULATOR
ELECTRO-OPTICAL MODULATOR

(30) Priorité: 17.02.1994 FR 9402015
(43) Date de publication de la demande: 04.12.1996
(73) Titulaire: UNIVERSITE DE METZ, F-57012 Metz Cédex (FR)
(72) Inventeur: SALVESTRINI, Jean-Paul, F-57078 Metz Cédex 3 (FR); FONTANA, Marc, F-57078 Metz Cédex 3 (FR)
(74) Mandataire: Schmit, Christian Norbert Marie
(86) Numéro de dépôt international: FR9500169
(87) Numéro de publication internationale: WO9522781

(56) Documents cités:
- US-A- 5 157 539
- JAPANESE JOURNAL OF APPLIED PHYSICS, SUPPLEMENTS 24-3 PROCEEDINGS OF THE 5TH MEETING ON FERROELECTRIC MATERIALS AND THEIR APPLICATIONS, KYOTO, vol.24, 1985, TOKYO JA pages 165 - 168 T.TSUKAMOTO & AL 'DEFLECTION OF LIGHT INDUCED BY FERROELECTRIC-FERROELASTIC CRYSTALS'
- FERROELECTRICS, vol.79, 1988 pages 245 - 248 R.POPRANSKI & AL 'SPECIFIC HEAT OF HYDROGEN SELENATE CRYSTALS'
- ACTA CRYSTALLOGRAPHICA, vol.B38, 1982, COPENHAGEN pages 2017 - 2020 A.WASKOWSKA & AL 'AMMONIUM DEUTERIUM SELENATE AND...'
- APPLIED PHYSICS LETTERS., vol.64, no.15, 11 Avril 1994, NEW YORK US pages 1920 - 1922 J.P.SALVESTRINI 'NEW MATERIAL WITH STRONG ELECTRO-OPTIC EFFECT:...'

## Description

L'invention concerne un modulateur électro-optique. De tels dispositifs sont utilisés pour moduler des faisceaux lumineux, c'est à dire modifier leur polarisation, leur phase, leur fréquence, ou leur intensité, en modifiant le milieu dans lequel ils se propagent par l'action d'un champ électrique.

A titre d'application de tels modulateurs, on pourra citer :
- le multiplexage de longueur d'onde permettant de créer, à partir d'un faisceau incident de longueur d'onde donnée, plusieurs faisceaux de longueurs d'onde différentes, par modulation de fréquence,
- la compression d'impulsions laser par modulation de fréquence,
- la génération d'impulsions laser par modulation de polarisation,
- la commutation spatiale par modulation de polarisation,
- la télécommunication optique par modulation d'intensité.

Les modulateurs électro-optiques sont réalisés soit à partir de matériaux massifs, en général des monocristaux constituant le milieu électro-optique traversé par le faisceau lumineux à moduler, soit à partir de films minces ou de guides d'onde. Ces derniers permettent d'obtenir une modulation dans un large domaine de fréquence (jusqu'à quelques gigahertz), ce qui est fort utile dans les télécommunications afin d'augmenter le débit d'informations transportées. De tels dispositifs sont de réalisation complexe et de coût élevé.

Bien que limités à des utilisations à des fréquences plus faibles (de quelques hertz à quelques centaines de mégahertz) les modulateurs réalisés à partir de cristaux massifs sont très utilisés, notamment pour des fonctions de modulation d'intensité ou de phase.

La quasi-totalité des modulateurs à cristaux actuellement commercialisés utilise comme matériau électro-optique un cristal de KDP (phosphate dihydrogéné de potassium) ou de ADP (phosphate dihydrogéné d'ammonium) . Le document US-A-5 157 539 décrit un modulateur électro-optique utilisant KDP comme cristal. Les qualités électro-optiques de ces matériaux sont parfaitement connues. Ils présentent l'avantage d'être des matériaux dont la synthèse est parfaitement maîtrisée et peu coûteuse.

Des publications:
- T. Tsukamoto et al., publié dans Japaneese Journal of Applied Physics, Vol. 24 (1985), Supplément 24-3 pages 165-168,
- R. Poprawski et al., publié dans Ferroelectrics, Vol. 79 (1988), pages 245-248,
- A. Waskowska et Z. Czapla , publié dans Acta Cryst. Vol. B38 (1982), pages 2017-2020,
dévoilent différentes propriétés électriques et calorimétriques des cristaux RbHSeO₄ et NH₄SeO₄, ainsi que ces même composés partiellement deutérisés qui ne permettent pas de savoir si il est possible de les utiliser dans un modulateur électro-optique.

D'autre part, parmi les matériaux utilisés, on peut citer les ferroélectriques minéraux (LiNbO₃, KNbO₃, BaTiO₃) qui possèdent généralement des coefficients électro-optiques et des indices de réfraction importants. Cependant leur permittivité diélectrique est importante et leur production est onéreuse et mal maîtrisée.

La direction du champ électrique appliqué au matériau électro-optique pourra être orthogonale (on parle alors de configuration transversale) ou bien colinéaire (on parle alors de configuration longitudinale) à la direction de propagation du faisceau lumineux.

Supposons un cristal en forme d'un parallélipède, avec L et d les dimensions du cristal respectivement dans la direction de propagation du faisceau à moduler et dans la direction du champ électrique. L est égal à d dans le cas d'une configuration longitudinale.

Un facteur primordial d'un modulateur est la tension demi-onde définie par V_{π} = (a * d)/(n³ * r * L) avec
- a la longueur d'onde du faisceau,
- n l'indice de réfraction du cristal,
- r le coefficient électro-optique du cristal.

Pour L = d, on a V_{π} = V_{π*} = a/(n³ * r). On parle alors de tension demi-onde réduite, qui est un facteur dépendant seulement de la nature du cristal.

La tension demi-onde V_{π} est la tension à appliquer au cristal pour provoquer un déphasage de π radians entre les composantes de la polarisation d'un faisceau lumineux traversant le modulateur c'est à dire le passage d'un maximum à un minimum de l'intensité de la lumière transmise à travers un polarisateur convenablement orienté. L'efficacité de modulation d'un faisceau lumineux dépend fortement de V_{π}. Il est important que cette tension V_{π} soit la plus faible possible.

Les composés à liaison hydrogène cités (ADP, KDP) possèdent des coefficients électro-optiques de valeurs non négligeables. Ils présentent par contre certains inconvénients. En effet, ils nécessitent des tensions de commande élevées.

Ainsi, pour une longueur d'onde a égale à 0.633 microns on a :
- V_{π*} ≈ 15 000 V pour un cristal de KDP,
- V_{π*} ≈ 10 000 V pour un cristal de ADP.

Afin de limiter la valeur de la tension électrique appliquée, les modulateurs comprennent des cristaux de dimension L importante et de dimension d faible. On obtient ainsi des tensions V_{π} de l'ordre de quelques centaines de volts. Il reste néanmoins nécessaire d'utiliser une unité amplificatrice de la tension appliquée. Ceci induit un important encombrement du dispositif de commande électrique associé au modulateur et un surcoût du système.

D'autre part la puissance électrique de commande est proportionnelle à la bande passante. On aura donc intérêt à avoir un matériau dont la tension demi-onde et la permittivité électrique sont les moins élevées possibles.

Enfin, l'emploi de tensions de commande importantes implique un risque d'endommagement du cristal et par suite une réduction de la durée de vie du modulateur.

Par ailleurs, la biréfringence des cristaux utilisés jusqu'à maintenant dépend fortement de la température, ce qui peut induire un déplacement du point de fonctionnement du modulateur. Ceci nécessite la mise en place du matériau dans une enceinte parfaitement contrôlée en température et/ou la compensation de la biréfringence naturelle. Elle peut être compensée par l'insertion dans le modulateur d'un second cristal de dimensions rigoureusement identiques au premier et d'orientation telle que sa biréfringence naturelle s'oppose exactement à celle du premier cristal.

Le fait d'accoler des cristaux en série implique, outre des contraintes de réalisation entraînant une augmentation du coût de fabrication des modulateurs (les cristaux se présentent en effet sous la forme de lames minces et longues délicates à réaliser lorsqu'il s'agit de fabriquer des monocristaux de bonne qualité optique), un certain nombre d'inconvénients dus à l'augmentation de la longueur du cristal à traverser :
- limitation de la bande passante du modulateur. La fréquence de modulation est un paramètre important dans la définition d'un cahier des charges d'un dispositif électro-optique. En effet, la fréquence de coupure d'un dispositif de communication optique, par exemple, gouverne le débit d'informations. Or, un cristal électro-optique de modulateur peut être modélisé en première approximation par un circuit électrique RC. La valeur de la capacité d'un condensateur est proportionnelle à la surface de ses électrodes. On aura donc intérêt à utiliser un cristal de faibles dimensions afin qu'il ait une capacité équivalente faible.
- augmentation des pertes dues à l'absorption impliquant une diminution de l'intensité du faisceau lumineux traversant le cristal.

L'inventeur a cherché à réaliser un modulateur électro-optique utilisant un cristal simple et peu coûteux à synnhétiser, et qui permette de s'affranchir autant que possible des contraintes mentionnées ci-dessus. En l'occurrence il propose d'utiliser un type de matériau qui s'est avéré présenter les caractéristiques suivantes :
- une valeur de tension demi-onde généralement inférieure aux valeurs précitées, permettant de mettre en oeuvre un modulateur utilisant une faible puissance de commande, à partir d'un cristal de faible dimension,
- une très faible sensibilité à la température, induisant la possibilité de réaliser un modulateur sans nécessité de prévoir des moyens de compensation en température, et
- permettant d'opérer dans la même gamme de fréquence que les modulateurs classiques.

Ainsi, l'invention propose l'utilisation dans un modulateur électro-optique d'un cristal électro-optique sous forme d'un composé de la solution solide de formule (NH₄)ₓRb₁₋ₓH_{1-y}D_{y}SeO₄, x et y étant des coefficients de concentration variant de 0 à 1, pour modifier la polarisation, la phase, ou l'intensité d'un faisceau lumineux entrant, à partir d'une tension de commande faible.

L'invention concerne également un modulateur électro-optique comprenant :
- un cristal électro-optique,
- une source de tension,
- des électrodes reliées à la source de tension pour produire un champ électrique dans le cristal,
caractérisé en ce que le cristal est un composé de la solution solide de formule (NH₄)ₓRb₁₋ₓH_{1-y}D_{y}SeO₄, x et y étant des coefficients de concentration variant de 0 à 1.

Le type de matériau envisagé dans l'invention pour réaliser un modulateur électro-optique présente une tension demi-onde réduite V_{π*} pouvant être limitée à environ 270 volts, soit de l'ordre de 55 fois moins élevée que pour le KDP et presque 37 fois moins élevée que pour l'ADP. Par suite, la tension V_{π} reste faible sans avoir à utiliser un cristal de dimension L importante. On diminue ainsi les pertes par absorption dans le cristal. On diminue également le temps de fabrication (et plus précisemment de croissance) des cristaux.

Le type de cristal proposé dans l'invention est d'autre part cinq à vingt fois moins sensible aux variations de température que la plupart des matériaux utilisés actuellement (ADP, KDP).

Enfin, il permet de moduler des ondes lumineuses aussi bien dans le domaine visible que dans le proche infra-rouge. On peut donc utiliser le modulateur dans le même domaine que les cristaux utilisés classiquement, voire un domaine plus étendu, en particulier dans l'infra-rouge.

D'autres avantages et particularités apparaîtront à à la lecture de la description détaillée qui suit d'un exemple de réalisation de l'invention, donnée à titre indicatif et nullement limitatif, et faite en référence aux dessins annexés dans lesquels :
- la figure 1 représente un premier modulateur électro-optique réalisé conformément à l'invention,
- la figure 2 représente un deuxième modulateur électro-optique réalisé conformément à l'invention.

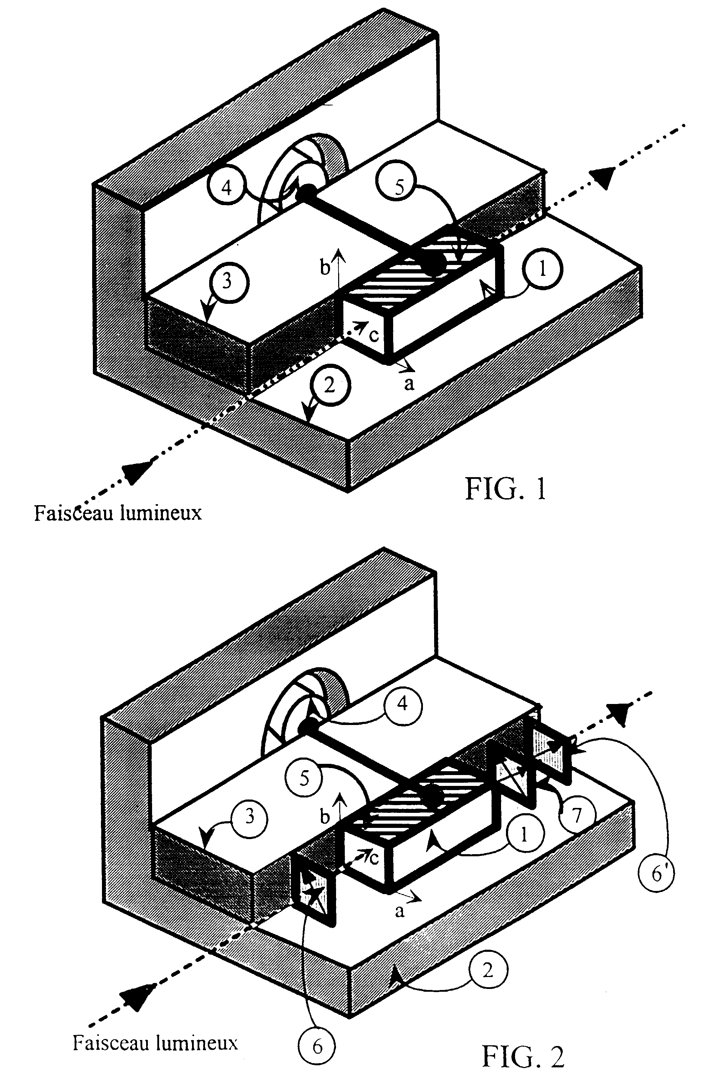

la figure 1 présente un premier modulateur électro-optique réalisé conformément à l'invention.

Il comprend :
- un cristal 1 taillé sous forme d'un parallélipède,
- un boîtier 2 servant de support, en forme de L laissant passer un faisceau lumineux à moduler,
- une source de tension, non représentée.
Le boîtier comporte deux fiches, dont une, portant la référence 4, est représentée sur la figure 1. Ces fiches permettent de relier deux faces opposées (dont une est représentée, portant la référence 5) du cristal 1 à la source de tension par le biais d'électrodes courant sur un socle isolant 3.

Les faces du cristal 1 reliée à la source de tension seront, de manière classique, couvertes d'un dépôt métallique, par exemple d'or ou d'argent, afin de créer un champ électrique homogène dans le volume du cristal.

Dans l'exemple décrit on supposera qu'un faisceau lumineux à moduler pénètre perpendiculairement à l'une des faces du cristal et que le modulateur est utilisé en configuration transversale, c'est à dire que le champ électrique créé dans le cristal est sensiblement perpendiculaire à la direction de propagation du faisceau lumineux dans le cristal.

De manière classique, on oriente le cristal de manière que le faisceau soit normal à un plan formé par deux des axes cristallins du cristal.

Par exemple, le faisceau sera normal au plan formé des axes cristallins a et b, et donc se propagera suivant l'axe cristallin c du cristal.

Selon l'invention, le cristal sera un composé de la solution solide de formule :

(NH₄)ₓRb₁₋ₓH_{1-y}D_{y}SeO₄,

x et y étant des coefficients de concentration variant de 0 à 1.

Il s'agira donc d'une solution solide de sélénate hydrogéné et/ou deutéré d'ammonium et/ou de rubidium.

Une plus grande concentration d'ammonium permet d'élargir la bande passante du modulateur.

Une plus grande concentration de rubidium permet de diminuer la valeur de la tension demi-onde.

Une plus grande concentration de deutérium permet d'élargir le spectre d'utilisation dans l'infra-rouge mais rend plus complexe la synthèse du cristal. Entre autre, cela implique l'emploi d'eau lourde, ce qui n'est pas le cas si le cristal est uniquement hydrogéné, c'est à dire si y = 0.

Par exemple, on pourra choisir un cristal de sélénate hydrogéné de rubidium, de formule RbHSeO₄ (x = 0, y = 0) ou de sélénate hydrogéné d'ammonium, de formule NH₄HSeO₄ (x = 1, y = 0).

La source de tension produira une tension alternative. On pourra aussi produire une tension comportant une composante alternative et une composante continue. La présence d'une composante continue est un moyen de compenser la dérive en température du modulateur en déplaçant son point de fonctionnement. En pratique, il ne sera pas nécessaire de produire une composante continue du fait de la faible sensibilité en température du type de cristal mis en oeuvre.

Suivant la nature du cristal, et plus particulièrement selon la valeur de x, on intercalera ou non un amplificateur entre la source de tension et le cristal. Ainsi, si le cristal est formé de sélénate hydrogéné de rubidium, il présente une tension demi-onde réduite de l'ordre de 270 volts. Pour un cristal ayant une dimension L de 10 millimètres et une dimension d de 2 millimètres, on obtiendra une tension demi-onde de l'ordre de 50 volts. On pourra donc se passer d'amplificateur. Si le cristal est formé se sélénate hydrogéné d'ammonium, la tension demi-onde réduite est approximativement dix fois plus élevée. On intercalera alors de préférence un amplificateur de la tension produite, évitant ainsi de devoir accroître de manière sensible le rapport L/d du cristal, ce qui augmenterait les pertes dues à l'absorption dans le cristal. En pratique, on pourra réaliser un modulateur dont la tension de commande est limitée à environ 200 volts, c'est à dire bien inférieure aux tensions habituellement utilisées.

Dans une version préférée, le champ électrique sera dirigé sensiblement parallèlement à l'axe ferroélectrique du cristal. Dans le cas où le cristal est formé à partir de sélénate hydrogéné de rubidium ou d'ammonium, il s'agit de l'axe cristallin b. De cette manière on bénéficiera de la tension demi-onde réduite V_{π*} ayant la valeur la plus faible. Cela est avantageux dans la mesure où on pourra choisir un cristal de rapport L/d plus faible, à tension de commande égale, par rapport à une orientation différente du champ électrique créé. De cette manière on augmente la compacité du modulateur.

La figure 2 présente un deuxième modulateur électro-optique réalisé conformément à l'invention.

Outre les éléments représentés à la figure 1, il comprend :
- un polariseur 6, placé en amont du cristal, dont l'axe est à 45 ° des axes cristallins du cristal 1 formant la face d'entrée de ce cristal (c'est à dire les axes a et b dans l'exemple décrit), et dans le plan de ces axes. Le polariseur 6 est donc classiquement positionné dans le plan d'incidence du faisceau à moduler. Sa présence permet d'utiliser le modulateur en tant que modulateur de phase ou modulateur de polarisation
- un deuxième polariseur 6' dont l'axe est à 90 ° du premier peut être placé en aval du cristal 1 afin d'utiliser le dispositif en tant que modulateur d'intensité.
- une lame quart d'onde 7, dont les axes rapide et lent sont orientés à 45 ° des axes cristallins a et b et dans le même plan, peut être insérée en aval du cristal 1, entre celui-ci et le deuxième polariseur 6', afin d'obtenir une réponse linéaire de la variation d'intensité en fonction du déphasage introduit par effet électro-optique.

Bien entendu, la présence d'un ou plusieurs polariseurs et d'une lame quart d'onde dépendra de l'utilisation du modulateur, suivant qu'on souhaite modifier l'intensité du faisceau lumineux, sa phase, sa polarisation, sa fréquence, ou plusieurs de ces caractéristiques simultanément.

La description du modulateur qui vient d'être faite n'est bien sûr pas limitative.

On pourra orienter le cristal de manière différente. Ainsi le champ électrique et la direction de propagation de l'onde lumineuse pourront être orientés différemment par rapport aux axes cristallins, voire non parallèles aux axes cristallins du cristal.

Bien qu'on ait décrit une configuration transversale du modulateur, on pourra bien entendu mettre en oeuvre une configuration longitudinale du champ. La configuration longitudinale, contrairement à la configuration transversale, ne permet pas de diminuer la tension de commande en jouant sur les dimensions du cristal. La configuration longitudinale est plus adaptée au traitement de faisceaux lumineux de diamètre important et nécessitant des encombrements réduits. Elle peut être utilisée pour la génération d'impulsions laser. Mais elle nécessite des tensions électriques plus importantes, et donc la modulation est limitée technologiquement à des fréquences réduites. De plus, elle nécessite la pose d'électrodes transparentes. La configuration transversale, quant à elle, autorise des bandes passantes importantes puisque la tension demi-onde peut être diminuée en augmentant la distance de propagation dans le cristal et en diminuant la distance inter-électrodes. Elle est cependant plus sensible aux variations de température.

On pourra également disposer plusieurs cristaux en série selon la direction de propagation du faisceau lumineux, orientés de manière que leurs biréfringences naturelles se compensent.

## Revendications

1. Utilisation dans un modulateur électro-optique d'un cristal électro-optique sous forme d'un composé de la solution solide de formule (NH₄)ₓRb₁₋ₓH_{1-y}D_{y}SeO₄, x et y étant des coefficients de concentration variant de 0 à 1, pour modifier la polarisation, la phase, ou l'intensité d'un faisceau lumineux entrant, à partir d'une tension de commande.

2. Utilisation dans un modulateur électro-optique d'un cristal électro-optique selon la revendication 1, caractérisé en ce que la tension demi-onde réduite est inférieure à environ 270 V.

3. Utilisation dans un modulateur électro-optique d'un cristal électro-optique selon la revendication 1, caractérisée en ce que le cristal utilisé est une solution solide de sélénate hydrogéné de rubidium.

4. Utilisation dans un modulateur électro-optique d'un cristal électro-optique selon la revendication 1, caractérisée en ce que le cristal utilisé est une solution solide de sélénate hydrogéné d'ammonium.

5. Modulateur électro-optique comprenant :
- un cristal électro-optique (1),
- une source de tension,
- des électrodes reliées à la source de tension pour produire un champ électrique dans le cristal,
caractérisé en ce que le cristal est un composé de la solution solide de formule (NH₄)ₓRb₁₋ₓH_{1-y}D_{y}SeO₄, x et y étant des coefficients de concentration variant de 0 à 1.

6. Modulateur selon la revendication 5, caractérisé en ce que les électrodes sont disposées de manière à produire dans le cristal un champ électrique sensiblement parallèle à l'axe ferroélectrique du cristal.

7. Modulateur selon la revendication 5, caractérisé en ce que les électrodes sont disposées de manière à produire dans le cristal un champ électrique sensiblement parallèle à l'axe cristallin b du cristal.

8. Modulateur selon l'une des revendications 5 à 7, caractérisé en ce qu'il comprend un polariseur (6) placé en amont du cristal.

9. Modulateur selon l'une des revendications 5 à 8, caractérisé en ce qu'il comprend un polariseur (6') placé en aval du cristal.

10. Modulateur selon l'une des revendications 5 à 9, caractérisé en ce qu'il comprend une lame quart d'onde (7) placée en aval du cristal.

11. Modulateur selon l'une des revendications 5 à 10, caractérisé en ce qu'il comprend deux cristaux placés en série de telle manière que leurs biréfringences naturelles se compensent.

12. Utilisation du modulateur selon l'une des revendications 5 à 11 pour modifier l'intensité d'un faisceau lumineux.

13. Utilisation du modulateur selon l'une des revendications 5 à 11 pour modifier la phase d'un faisceau lumineux.

14. Utilisation du modulateur selon l'une des revendications 5 à 11 pour modifier la polarisation d'un faisceau lumineux.

15. Utilisation du modulateur selon l'une des revendications 5 à 11 pour modifier la fréquence d'un faisceau lumineux.

## Patentansprüche

1. Verwendung in einem elektro-optischen Modulator eines elektro-optischen Kristalls in Form einer Zusammensetzung der festen Lösung mit der Formel
(NH₄)ₓRb₁₋ₓH_{1-y}D_{y}SeO₄,
wobei x und y Konzentrationskoeffizienten zwischen 0 und 1 sind, um die Polarisation, die Phase oder die Intensität eines eintretenden Lichtstrahls mit einer Steuerspannung zu ändern.

2. Verwendung in einem elektro-optischen Modulator eines elektro-optischen Kristalls nach Anspruch 1, dadurch gekennzeichnet, daß die reduzierte Halbwellenspannung kleiner als ungefähr 270 V ist.

3. Verwendung in einem elektro-optischen Modulator eines elektro-optischen Kristalls nach Anspruch 1, dadurch gekennzeichnet, daß der verwendete Kristall eine feste Lösung von wasserstoffhaltigem Rubidiumselenat ist.

4. Verwendung in einem elektro-optischen Modulator eines elektro-optischen Kristalls nach Anspruch 1, dadurch gekennzeichnet, daß der verwendete Kristall eine feste Lösung eines wasserstoffhaltigen Ammoniumselenats ist.

5. Elektro-optischer Modulator, der umfaßt:
- einen elektro-optischen Kristall (1),
- eine Spannungsquelle,
- Elektroden, die mit der Spannungsquelle verbunden sind, um ein elektrisches Feld in dem Kristall zu erzeugen,
dadurch gekennzeichnet, daß der Kristall eine Verbindung der festen Lösung mit der Formel
(NH₄)ₓRb₁₋ₓH_{1-y}D_{y}SeO₄
ist,
wobei x und y Konzentrationskoeffizienten zwischen 0 und 1 sind.

6. Modulator nach Anspruch 5, dadurch gekennzeichnet, daß die Elektroden so angeordnet sind, daß sie in dem Kristall ein elektrisches Feld erzeugen, das im wesentlichen parallel zur ferroelektrischen Achse des Kristalls verläuft.

7. Modulator nach Anspruch 5, dadurch gekennzeichnet, daß die Elektroden derart angeordnet sind, daß sie in dem Kristall ein elektrisches Feld erzeugen, das im wesentlichen parallel zur kristallinen b-Achse des Kristalls ist.

8. Modulator nach einem der Ansprüche 5 bis 7, dadurch gekennzeichnet, daß er einen Polarisator (6) oberhalb vom Kristall umfaßt.

9. Modulator nach einem der Ansprüche 5 bis 8, dadurch gekennzeichnet, daß er einen Polarisator (6') unterhalb des Kristalls umfaßt.

10. Modulator nach einem der Ansprüche 5 bis 9, dadurch gekennzeichnet, daß er eine Viertelwellenplatte (7) oberhalb des Kristalls umfaßt.

11. Modulator nach einem der Ansprüche 5 bis 10, dadurch gekennzeichnet, daß er zwei Kristalle in Serie derart umfaßt, daß ihre natürliche Doppelbrechung sich kompensiert.

12. Verwendung eines Modulators nach einem der Ansprüche 5 bis 11 zum Modifizieren der Intensität eines Lichtstrahls.

13. Verwendung eines Modulators nach einem der Ansprüche 5 bis 11 zum Modifizieren der Phase eines Lichtstrahls.

14. Verwendung eines Modulators nach einem der Ansprüche 5 bis 11 zum Modifizieren der Polarisation eines Lichtstrahls.

15. Verwendung eines Modulators nach einem der Ansprüche 5 bis 11 zum Modifizieren der Frequenz eines Lichtstrahls.

## Claims

1. Use in an electro-optical modulator of an electro-optical crystal in the form of solid-solution compound of formula (NH₄)ₓRb₁₋ₓH_{1-y}D_{y}SeO₄, x and y being concentration coefficients varying from 0 to 1, in order to modify the polarization, the phase or the intensity of an incident light beam, using a control voltage.

2. Use in an electro-optical modulator of an electro-optical crystal according to claim 1, characterized in that the reduced half-wave voltage is less than around 270 V.

3. Use in an electro-optical modulator of an electro-optical crystal according to Claim 1, characterized in that the crystal used is a solid solution of rubidium hydrogen selenate.

4. Use in an electro-optical modulator an electro-optical crystal according to Claim 1, characterized in that the crystal used is a solid solution of ammonium hydrogen selenate.

5. Electro-optical modulator comprising:
- an electro-optical crystal (1),
- a voltage source,
- electrodes connected to the voltage source in order to produce an electric field in the crystal,
characterized in that the crystal is a solid-solution compound of formula (NH₄)ₓRb₁₋ₓH_{1-y}D_{y}SeO₄, x and y being concentration coefficients varying from 0 to 1.

6. Modulator according to Claim 5, characterized in that the electrodes are arranged so as to produce in the crystal an electric field substantially parallel to the ferroelectric axis of the crystal.

7. Modulator according to Claim 5, characterized in that the electrodes are arranged so as to produce in the crystal an electric field substantially parallel to the crystalline axis b of the crystal.

8. Modulator according to one of Claims 5 to 7, characterized in that it comprises a polarizer (6) placed upstream of the crystal.

9. Modulator according to one of Claims 5 to 8, characterized in that it comprises a polarizer (6') placed downstream of the crystal.

10. Modulator according to one of Claims 5 to 9, characterized in that it comprises a quarter-wave plate (7) placed downstream of the crystal.

11. Modulator according to one of Claims 5 to 10, characterized in that it comprises two crystals placed in series such that their natural birefringences compensate each other.

12. Use of the modulator according to one of Claims 5 to 11 in order to modify the intensity of a light beam.

13. Use of the modulator according to one of Claims 5 to 11 in order to modify the phase of a light beam.

14. Use of the modulator according to one of Claims 5 to 11 in order to modify the polarization of a light beam.

15. Use of the modulator according to one of Claims 5 to 11 in order to modify the frequency of a light beam.
